# EUROPÄISCHE PATENTSCHRIFT

(11) **EP 2 789 083 B1**
(45) Veröffentlichungstag und Bekanntmachung des Hinweises auf die Patenterteilung: **02.03.2016**
(21) Anmeldenummer: 12810164.9
(22) Anmeldetag: 12.12.2012
(51) Int. Cl.: H02K 55/04, F28D 15/02

(54) **VORRICHTUNG ZUR KÜHLUNG EINER SUPRALEITENDEN MASCHINE**
DEVICE FOR COOLING A SUPERCONDUCTING MACHINE
DISPOSITIF DE REFROIDISSEMENT D'UNE MACHINE SUPRACONDUCTRICE

(30) Priorität: 26.01.2012 DE 102012201108
(43) Veröffentlichungstag der Anmeldung: 15.10.2014
(73) Patentinhaber: Siemens Aktiengesellschaft, 80333 München (DE)
(72) Erfinder: FRANK, Michael, 91080 Uttenreuth (DE); VAN HASSELT, Peter, 91058 Erlangen (DE)
(86) Internationale Anmeldenummer: PCT/EP2012/075195
(87) Internationale Veröffentlichungsnummer: WO 2013/110403

(56) Entgegenhaltungen:
- DE-C- 442 457
- JP-A- H02 238 117
- JP-A- 2008 043 938
- US-A1- 2007 095 075

## Beschreibung

Die Erfindung betrifft eine Vorrichtung zur Kühlung einer supraleitenden Maschine, umfassend ein kondensiertes Kühlmittel aufnehmendes Vorratsgefäß, aus dem das Kühlmittel über ein Rohr der Maschine zuführbar ist.

Supraleitende Maschinen umfassen in der Regel supraleitende Spulen, welche zumindest während des Betriebs der Maschine zuverlässig gekühlt werden müssen. Je nach verwendetem Supraleitermaterial sind unterschiedliche Kühltemperaturen erforderlich, wobei seit geraumer Zeit auch Materialien mit Sprungtemperaturen T_{C} von über 77 K bekannt sind. Diese Materialien werden auch als Hoch(High)-T_{C}-Supraleitermaterialien oder HTS-Materialien bezeichnet. Als Kühlmittel können flüssiger Stickstoff, flüssiges Neon oder insbesondere flüssiges Helium verwendet werden. Dieses Kühlmittel ist im Kontakt mit der Wicklung bzw. ihrer wärmeleitenden Trägerstruktur zu bringen, um die supraleitende Wicklung zu kühlen.

Aufgrund zumeist technischer Randbedingungen ist es mitunter erforderlich, hierzu das Kühlmittel entgegen der Schwerkraft zu transportieren, mithin also von einer niedrigeren Position zur höher positionierten Maschine zu fördern. Dieser Transport des flüssigen Kühlmittels kann mittels mechanisch angetriebener Pumpen, mittels Blasenpumpen oder durch entweder von außen aufgeprägten oder durch Verdampfen von Kühlmittel erzeugten Überdruck erfolgen. Mechanisch angetriebene Pumpen sind sehr wartungsintensiv, im Betrieb kommt es zur Wärmeerzeugung, wobei vermieden werden muss, dass diese in das Kühlmittel eingeleitet wird, wie auch die Lebensdauer solcher Pumpen problematisch ist. Blasenpumpen vermeiden diese Nachteile teilweise, sind jedoch dadurch, dass ihre Funktion vom Auftrieb einer Gasblase im Kühlmedium abhängt, hinsichtlich der Förderleistung eingeschränkt. Der mögliche Steigrohrdurchmesser ist begrenzt, wie auch die Steighöhe und die Pumpgeschwindigkeit.

Technisch vorteilhaft ist der Transport des Kühlmittels mittels Überdruck. Hierzu werden entweder gesteuerte Pumpen und Ventile für das Warmgas (im Fall einer Aufbringung des Überdrucks von außen) oder Steuerungen, Heizungen etc. für die Erzeugung des Überdrucks durch Verdampfen benötigt. All diese aktiven Komponenten bergen jedoch das Risiko von Ausfällen und bedeuten zudem einen nicht unerheblichen Zusatzaufwand für das Gesamtsystem. Eine Vorrichtung, die mit separat angesteuerten, zeitlich modulierten Heizeinrichtungen arbeitet, ist aus DE 10 2010 041 194 bekannt. Dort sind mehrere Kondensorräume mit jeweils einem zugeordneten Kaltkopf vorgesehen, die über jeweilige Verbindungsleitungen fluidisch mit einem gemeinsamen maschinenseitig vorgesehenen Verdampferraum verbunden sind. Jeder Kondensorraum weist eine eigene Heizeinrichtung auf. Soll Kühlmittel aus einem Kondensorraum über die Verbindungsleitung zum Verdampferraum gefördert werden, so wird die Heizeinrichtung des jeweiligen betroffenen Kondensorraums zugeschaltet, so dass sich eine Temperatur einstellt, die zu einem Verdampfen des Kühlmittels dient. Dieses dehnt sich im Kondensorraum aus, es kommt zu einer Druckerhöhung, worüber das flüssige Kühlmittel, das sich in der Verbindungsleitung zum Verdampferraum befindet, in diesen gedrückt wird. Die einzelnen Heizeinrichtungen der separaten Kondensorräume werden zeitlich moduliert zugeschaltet, sie werden also sukzessive zeitlich versetzt zueinander betrieben. Die Verdampfung des Kühlmittels erfolgt also im Kondensorraum selbst über die diesem zugeordnete Heizeinrichtung.

Die Zirkulation von Kühlflüssigkeit durch Ausnutzung des ThermosyphonEffektes wird in JP02238117 und US2007095075 beschrieben.

Der Erfindung liegt das Problem zugrunde, eine einfach aufgebaute Kühlvorrichtung anzugeben, die auf einfache Weise die Erzeugung eines Überdrucks durch Verdampfen von Kühlmittel ermöglicht.

Zur Lösung dieses Problems ist bei einer Vorrichtung der eingangs genannten Art erfindungsgemäß vorgesehen, dass das Vorratsgefäß gemäß Anspruch 1 einen Vorratsbereich und einen davon abgetrennten Verdampferbereich mit einer kontinuierlich eine Temperatur oberhalb der Siedetemperatur des Kühlmittels aufweisenden Wärmequelle aufweist, der über ein gekrümmtes Überlaufrohr mit dem Vorratsbereich derart verbunden ist, so dass mit Erreichen eines bestimmten Kühlmittelfüllstands im Vorratsbereich Kühlmittel über das Überlaufrohr automatisch in den Verdampferbereich strömt und dort verdampft.

Bei der erfindungsgemäßen Vorrichtung ist der Verflüssigungseinrichtung, die zum Kondensieren des gasförmig von der Maschine zurückgeführten Kühlmittels dient, also dem Kondensor, ein separates Vorratsgefäß nachgeschaltet. Dieses Vorratsgefäß ist zweiteilig ausgeführt. Es weist einen Vorratsbereich auf, in dem sich das vom Kondensor zumeist tröpfchenweise kommende verflüssigte Kühlmittel ansammelt. Dem Vorratsbereich nebengeordnet, mit ihm jedoch atmosphärisch verbunden, ist ein Verdampferbereich vorgesehen. Diesem ist eine Wärmequelle zugeordnet, die kontinuierlich eine Temperatur oberhalb der Siedetemperatur des fluiden Kühlmittels aufweist. Diese Wärmequelle wird nicht moduliert. Der Verdampferbereich ist zunächst leer, das kondensierte Kühlmittel sammelt sich ausschließlich im Vorratsbereich an. Mit der Zeit steigt dort der Kühlmittelspiegel. Erreicht der Kühlmittelfüllstand ein definiertes Niveau, so fließt Kühlmittel aus dem Vorratsbereich über ein gekrümmtes Überlaufrohr, das den Vorratsbereich mit dem Verdampferbereich verbindet, in den Verdampferbereich, wo es verdampft. Durch das Verdampfen stellt sich verdampfungsbedingt im mit dem Verdampferbereich kommunizierenden Vorratsbereich ein Überdruck dar, der ein die Abförderung des im Vorratsbereich befindlichen Kühlmittels über das zur Maschine führende Rohr, das als Steigrohr ausgebildet ist, erwirkt. Das Steigrohr erstreckt sich zur oberhalb der Vorrichtung respektive insbesondere des Vorratsgefäßes angeordneten Maschine, das flüssige Kühlmittel kann über den Überdruck ohne weiteres über das Steigrohr zur Maschine gefördert werden.

Zentrales Element ist das gekrümmte Überlaufrohr, das als Saugheber wirkt, mithin also das automatische Überlaufen ermöglicht, wenn der Füllstand im Vorratsbereich so weit angestiegen ist, dass der Scheitelpunkt des Überlaufrohres überschritten wird. Dieser automatische Kühlmittelfluss findet so lange statt, bis der Pegel auf der Einlassseite, also im Vorratsbereich, wieder unter die Einlauföffnung des Überlaufrohres sinkt. Hierüber ist es also möglich, in sehr kurzer Zeit ein beachtliches Volumen automatisch aus dem Vorratsbereich in den Verdampferbereich zu fördern, wo es sofort verdampft, so dass in sehr kurzer Zeit ein beachtlicher Überdruck aufgebaut werden kann.

Die erfindungsgemäße Vorrichtung lässt folglich eine sehr einfache Förderung eines definierten Kühlmittelvolumens vom Vorratsbereich in den Verdampferbereich zu. Darüber hinaus ist keine modulierte Beheizung erforderlich, vielmehr ist eine kontinuierliche Temperierung des Verdampferbereichs vorgesehen.

Das Überlaufrohr ist gemäß einer vorteilhaften Weiterbildung U-förmig gekrümmt und in umgekehrter U-Anordnung mit einem Ansaugschenkel im Vorratsbereich und einem Ablaufschenkel im Verdampferbereich angeordnet. Über die Länge des Ansaugschenkels respektive den Höhenunterschied zwischen der Einlauföffnung am Ansaugschenkel und dem Scheitelpunkt des Überlaufrohres wird letztlich das Volumen definiert, das automatisch mit Erreichen des vorbestimmten Kühlmittelfüllstands aus dem Vorratsbereich in den Verdampferbereich gesaugt wird.

Die Trennung des Vorratsbereichs vom Verdampferbereich erfolgt bevorzugt über eine Trennwand, die beide Bereiche lediglich fluidisch und thermisch voneinander trennt, nicht jedoch atmosphärisch. Denn es muss ja sichergestellt sein, dass durch Verdampfen des Kühlmittels im Verdampferbereich sich auch im Vorratsbereich, wo das abzufördernde Kühlmittel vorhanden ist, ein Überdruck einstellen kann. Der Scheitelpunkt des Überlaufrohres ist so positioniert, dass er unterhalb der Oberkante der den Vorratsbereich vom Verdampferbereich trennenden Trennwand liegt.

Wie beschrieben hängt das automatisch aus dem Vorratsbereich abgesaugte Kühlmittelvolumen vom Abstand der Ansaugöffnung des Ansaugschenkels zum Scheitelpunkt des Überlaufrohres ab. Dieser Abstand sollte wenigstens einen, vorzugsweise mehrere Zentimeter betragen, um ein hinreichendes Kühlmittelvolumen in den Verdampferbereich fördern und verdampfen zu können.

Mitunter kann der Fall eintreten, dass es zu einer Bewegung des Gesamtsystems bestehend aus der erfindungsgemäßen Vorrichtung und der Maschine, die kontinuierlich zu kühlen ist, kommt, insbesondere während des Transports beispielsweise auf einem Schiff. Eine Neigung des Schiffes führt zu einer Neingungsbewegung auch der Vorrichtung, die in einer Neigung des Kühlmittelspiegels resultiert, das heißt, dass sich die Pegellage ändert. Tritt eine solche Änderung gerade in dem Moment ein, in dem der Absaugvorgang begonnen hat, so kann es dazu kommen, dass nur ein relativ geringes Volumen abgesaugt wird, da bewegungsbedingt das Überlaufrohr seine Lage relativ zum Kühlmittelspiegel ändert. Auch ist es natürlich denkbar, dass es infolge der Schwankung trotz hinreichender Füllmenge im Vorratsbereich nicht zu einem Absaugen kommt, da lagebedingt der Kühlmittelspiegel eben nicht den Scheitelpunkt des Überlaufrohres erreicht. Um dem entgegenzuwirken, sieht eine besonders vorteilhafte Weiterbildung der Erfindung vor, dass im Vorratsbereich mittels einer Überlaufwand ein Überlaufbereich abgetrennt ist, in den.Kühlmittel überläuft und aus dem mit Erreichen eines bestimmten Füllstands Kühlmittel über das Überlaufrohr in den Verdampferbereich läuft. Bei dieser Erfindungsausgestaltung wird im Vorratsbereich nochmals ein separater Überlaufbereich abgetrennt. Hierzu ist eine geeignete Wandkonstruktion vorgesehen. Flüssiges, vom Kondensor kommendes Kühlmittel sammelt sich im Vorratsbereich an und steigt im Laufe der Zeit. Ist der Füllstand so hoch, dass die Oberkante der Überlaufwand erreicht wird, so läuft das Kühlmittel sukzessive auch in den Überlaufbereich. In diesen ragt das Überlaufrohr mit seinem Ansaugschenkel. Wird bei korrekter Positionierung der Vorrichtung der bestimmte Füllstand im Überlaufbereich erreicht, kommt es zum automatischen Absaugen des im Überlaufbereich befindlichen definierten Kühlmittelvolumens. Aus dem übrigen Vorratsbereich wird nicht abgesaugt, da dies über die Überlaufwand verhindert wird. Kommt es nun vorher oder während des Absaugens zu einer Relativbewegung der Vorrichtung, so wirkt sich diese nur marginal auf den Füllstand respektive Kühlmittelspiegel im Überlaufbereich aus, da dieser Bereich nur ein sehr begrenzter Bereich ist, der also deutlich kleiner ist als der Vorratsbereich, in dem sich aufgrund seiner Größe eine Positionsänderung wesentlich stärker auf die Kühlmittelspiegellage auswirkt als in dem kleinen Überlaufbereich. Das heißt, dass die Höhe des Kühlmittelpegels im Vorratsbereich folglich einen deutlich geringeren Einfluss auf die in den beheizten Verdampferbereich transportierte Kühlmittelmenge hat.

Die Wärmequelle, die dem Verdampferbereich zugeordnet ist, kann eine Heizung sein, insbesondere eine Widerstandsheizung, die kontinuierlich betrieben wird und lediglich auf einer Temperatur gehalten werden muss, die oberhalb der Siedetemperatur des Kühlmittels liegt.

Alternativ dazu kann die Wärmequelle auch eine Wandfläche, insbesondere die Bodenfläche des Verdampferbreichs sein, welche Wandfläche in der Montagestellung mit einem eine oberhalb der Siedetemperatur des Kühlmittels liegende Temperatur aufweisenden Drittgegenstand in thermischem Kontakt steht. Diese besonders zweckmäßige Erfindungsausgestaltung verzichtet vollkommen auf eine zusätzliche Heizung, sondern nutzt den Umstand, dass benachbart zum Vorratsgefäß respektive zum Verdampferbereich in der Montagestellung in der Regel ein Drittgegenstand vorhanden ist, der eine deutlich oberhalb der ja in der Regel im Bereich weniger zig Kelvin liegenden Siedetemperatur des Kühlmittels liegende Eigentemperatur besitzt. Wird nun eine Wandfläche des Verdampferbereichs, vorzugsweise seine Bodenfläche, in thermischen Kontakt mit diesem Drittgegenstand gebracht, beispielsweise indem beide direkt aneinander anliegen, oder über ein wärmeübertragendes Bauteil, das zwischengeschaltet wird, so kann der Verdampferbereich ohne weiteres kontinuierlich temperiert werden und die Verdampfung sichergestellt werden.

Wenngleich es mitunter bereits ausreichend ist, lediglich ein Vorratsgefäß vorzusehen, um die Maschine ausreichend zu kühlen, ist es jedoch denkbar, dass insbesondere bei großen Maschinen eine entsprechend große Kühlleistung bereitzustellen ist. Zu diesem Zweck kann es erforderlich sein, mehrere Vorratsgefäße mit jeweils separaten, als Steigleitungen ausgeführten Rohren vorzusehen. Diese Steigleitungen können nun entweder separat zur Maschine geführt und im Verdampferbereich münden, wozu entsprechende abgedichtete Durchführungen in den den Verdampferbereich respektive die supraleitenden Wicklungen umgebenden Vakuumbereich vorzusehen sind. Denkbar ist es aber auch, die Steigleitungen in eine gemeinsame zur Maschine laufende Zuleitung münden zu lassen, was dahingehend von Vorteil ist, als nur diese eine Zuleitung abgedichtet in die Maschine zu führen ist.

Kommen mehrere Vorratsgefäße zum Einsatz, so kann jedem Vorratsgefäß eine eigene Verflüssigungseinrichtung zum Kondensieren des von der Maschine kommenden gasförmigen Kühlmittels zugeordnet sein, das heißt, dass jedes Vorratsgefäß einen eigenen zugeordneten Kondensor aufweist. Alternativ ist es aber auch denkbar, dass den Vorratsgefäßen eine gemeinsame Verflüssigungseinrichtung zugeordnet ist, über die alle Vorratsbereiche gefüllt werden, gegebenenfalls unter Zwischenschaltung geeigneter Ventile gesteuert.

Weitere Vorteile, Merkmale und Einzelzeiten der Erfindung ergeben sich aus dem im Folgenden beschriebenen Ausführungsbeispiel sowie anhand der Zeichnungen. Dabei zeigen:
- Fig. 1: eine Prinzipdarstellung einer erfindungsgemäßen Vorrichtung mit zugeordneter Verflüssigungseinrichtung und der zu kühlenden Maschine, und
- Fig. 2: eine vergrößerte Prinzipdarstellung der erfindungsgemäßen Vorrichtung zur Darstellung des Funktionsprinzips.

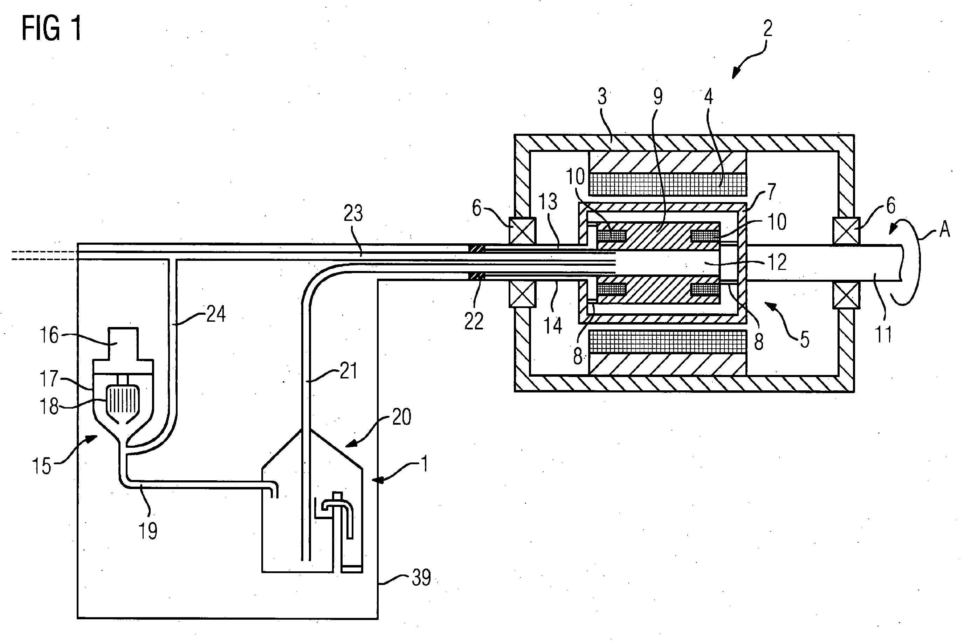

Fig. 1 zeigt eine erfindungsgemäße Vorrichtung 1, die nachfolgend noch im Detail erläutert wird. Sie dient der Kühlung und damit dem Betrieb einer hier gezeigten rotierenden Maschine 2, die ein feststehendes, auf Raumtemperatur befindliches Außengehäuse 3 mit einer Ständerwicklung 4 aufweist (natürlich kann auch eine statische Maschine vorgesehen sein). Innerhalb des Außengehäuses und von der Ständerwicklung 4 umschlossen ist ein Rotor 5 drehbar um eine Rotationsachse gelagert, wie durch den Pfeil A dargestellt ist. Der Rotor 5 ist in Lagern 6 drehgelagert. Er weist ein Vakuumgehäuse 7 auf, in dem an z. B. hohlzylindrischen, Drehmoment übertragenden Aufhängeelementen 8 ein Wicklungsträger 9 mit einer HTS-Wicklung 10 gehaltert ist. In diesem Wicklungsträger ist konzentrisch zur Rotationsachse ein sich in Achsrichtung erstreckender Hohlraum 12 vorhanden, der beispielsweise eine Zylinderform hat. Der Wicklungsträger 9 ist dabei vakuumdicht gegenüber diesem Hohlraum 12 ausgeführt. Er schließt diesen auf einer Seite des Rotors ab, der auf dieser Seite mittels eines massiven axialen Rotorwellenteils 11 gelagert ist. Auf der gegenüberliegenden Seite ist der zentrale Hohlraum 12 an einen seitlichen Hohlraum 13 angeschlossen. Dieser seitliche Hohlraum 13 führt von dem Bereich des Wicklungsträgers 9 nach außen aus dem Außengehäuse 3 hinaus, wozu entsprechende, nachfolgend noch beschriebene Zu- und Ableitungen dienen. Ein diesen seitlichen Hohlraum 13 umschließender, in einem der Lager 6 gelagerter rohrförmiger Rotorwellenteil ist mit 14 bezeichnet. Der grundsätzliche Aufbau einer solchen, mit supraleitenden Wicklungen arbeitenden Maschine ist dem Grunde nach bekannt, ein detailliertes Eingehen hierauf ist nicht erforderlich.

Zu einer indirekten Kühlung der HTS-Wicklung über wärmeleitende Teile ist die erfindungsgemäße Vorrichtung 1 vorgesehen, der eine Verflüssigungseinrichtung 15, also ein Kondensor, vorgeschaltet ist. Diese Verflüssigungseinheit umfasst einen Kaltkopf 16, bei dem es sich beispielsweise um einen Kryokühler vom Typ Gifford-McMahon oder insbesondere um einen regenerativen Kryokühler wie z. B. einen Pulsröhrenkühler oder einen Split-Stirling-Kühler handeln kann. Das Kaltteil des Kaltkopfes 16 befindet sich in einem Vakuumgefäß 17 in Kontakt mit einer Kondensationseinheit 18, wo von der Maschine kommendes, gasförmiges Kühlmittel kondensiert. Über eine Zufuhrleitung 19 fließt das kondensierte Kühlmittel zur erfindungsgemäßen Vorrichtung 1, worauf nachfolgend noch eingegangen wird.

Die erfindungsgemäße Vorrichtung 1 umfasst ein Vorratsgefäß 20, von dem aus ein Rohr 21 in Form einer Steigleitung zur Maschine führt. Das Rohr 21 ist über eine geeignete Dichtungseinrichtung 22 abgedichtet in den Hohlraum 13 und weiter in den Hohlraum 12 geführt. Über das Rohr 21 kann verflüssigtes Kühlmittel aus dem Vorratsgefäß 20 über einen darin erzeugten Überdruck in den Hohlraum 12 gefördert werden. Dort verdampft es, nimmt also Wärme von dem den Hohlraum umgebenden Wicklungsträger 9 respektive den zu kühlenden supraleitenden HTS-Wicklungen 10 auf. Das verdampfte, gasförmige Kühlmittel wird sodann über eine weitere Leitung 23, die vom Hohlraum 12 abgeht und wiederum über die Dichtungseinrichtung 22 abgedichtet aus der Maschine herausgeführt wird, abgefördert und im gezeigten Beispiel über eine Abzweigleitung 24 zur Verflüssigungseinrichtung 15 geführt. Exemplarisch dargestellt ist die Möglichkeit, die Leitung 23 zu verlängern, um hierüber auch eine oder mehrere weitere Verflüssigungseinrichtungen 15 nebst zugeordneten separaten Vorrichtungen einzuspeisen, wobei jede weitere Vorrichtung 1 in entsprechender, wie zur gezeigten Vorrichtung 1 dargestellter Weise über ein Rohr 21 mit dem Hohlraum 12 in Verbindung steht.

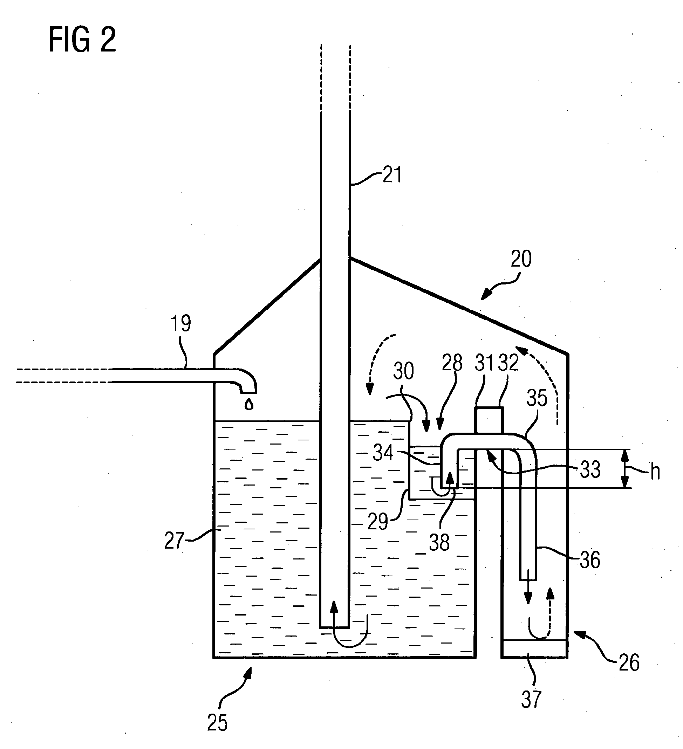

In dem geschlossenen Kreislauf, gebildet von der erfindungsgemäßen Vorrichtung 1, den Hohlräumen 12 und 13 der Maschine 2 sowie dem Leitungssystem aus den Leitungen 23, 24 und der Verflüssigungseinrichtung 15 ist ein Kühlmittel (Füllmenge z. B. 1 l oder mehr) vorhanden, das der Kühlung der supraleitenden HTS-Wicklungen 10 dient. Dieses Kühlmittel kann beispielsweise Helium (Kondensationstemperatur 4,2 K bei Normal-druck), Wasserstoff (Kondensationstemperatur 20,4 K bei Normaldruck), Neon (Kondensationstemperatur 27,1 K bei Normaldruck), Stickstoff (Kondensationstemperatur 77,4 K bei Normaldruck) oder Argon (Kondensationstemperatur 87,3 K bei Normaldruck) sein. Auch Mischungen aus diesen Gasen kommen in Frage. Dieses Kühlmittel kondensiert in der Verflüssigungseinrichtung 15 und wird wie beschrieben über die Leitungen 19 dem Vorrichtungsgefäß 20 zugeführt, siehe auch Fig. 2.

Das Vorratsgefäß 20 besteht aus zwei Bereichen, nämlich dem Vorratsbereich 25 und dem davon fluidisch abgetrennten, jedoch atmosphärisch noch verbundenen Verdampferbereich 26. In den Vorratsbereich mündet das Rohr 21, wie auch das Rohr 19, aus dem mehr oder weniger kontinuierlich Kühlmittel zuläuft. Das kondensierte Kühlmittel 27 sammelt sich im Vorratsbereich 25 an, der Pegel steigt kontinuierlich. Mit Erreichen des in Fig. 2 gezeigten Füllstands fließt das Kühlmittels 27 in einen Überlaufbereich 28, der mittels einer Überlaufwand 29 innerhalb des Vorratsbereichs 25 abgetrennt ist. Diese Überlaufwand 29 weist einen Boden und Wandabschnitte auf, oberseitig ist der Überlaufbereich 28 offen, so dass das Kühlmittel 27 über die Oberkante der Überlaufwand 29 einströmen kann. Die Oberkante 30 der Überlaufwand 29 liegt höhenmäßig unterhalb der Oberkante 31 einer Trennwand 32, über die der Vorratsbereich 25 vom Verdampferbereich 26 getrennt ist.

Vorgesehen ist ferner ein Überlaufrohr 33, das als Saugheber fungiert. Es verbindet den Vorratsbereich 25 respektive den Überlaufbereich 28 mit dem Verdampferbereich 26. Das U-förmige Überlaufrohr weist einen Ansaugschenkel 34 auf, der in den Überlaufbereich 28 eintaucht. Der Ansaugschenkel 34 geht in einen im gezeigten Beispiel horizontal verlaufenden Querschenkel 35 über, der wiederum in einen vertikal stehenden Ablaufschenkel 36 übergeht. Der Querschenkel 35 verläuft unterhalb der Oberkante 31 der Trennwand 32.

Vorgesehen ist ferner eine Wärmequelle 37 im Verdampferbereich 26. Diese Wärmequelle 37 ist im gezeigten Beispiel bodenseitig am Verdampferbereich 26 angeordnet. Es kann sich um eine separate, jedoch kontinuierlich betriebene Heizeinrichtung handeln, die im Verdampferbereich bodenseitig eine Temperatur erzeugt respektive aufweist, die oberhalb der Siedetemperatur des verwendeten Kühlmittels 27 liegt. Die Wärmequelle 37 kann aber auch über einen Drittgegenstand, der thermisch in Kontakt mit dem Boden des Verdampferbereichs 26 steht, realisiert werden. In jedem Fall muss sichergestellt sein, dass der Verdampferbereich eine entsprechende Wärmequelle 37 aufweist, die höher als die Siedetemperatur des Kühlmittels ist.

Die kryogenen Bauteile sind in einer Vakuum-Isolierung 39 aufgenommen.

Die Funktionsweise der Vorrichtung 1 ist exemplarisch Fig. 2 zu entnehmen.

Wie beschrieben strömt über die Leitung 19 weitgehend kontinuierlich Kühlmittel 27 zu, der Kühlmittelspiegel im Vorratsbereich 25 steigt kontinuierlich. Mit Erreichen eines Pegelstandes, der der Oberkante 30 der Überlaufwand 29 entspricht, strömt Kühlmittel 27 in den Überlaufbereich 28 ein, so dass auch dort im Laufe der Zeit der Kühlmittelpegel ansteigt. Der Füllvorgang läuft so lange ab, bis das Niveau des im Überlaufbereich 28 befindlichen Kühlmittels dem Scheitelpunkt des Überlaufrohres 33 entspricht, hier im gezeigten Beispiel der unteren Ebene des Querschenkels 35. Ab Erreichen dieses Pegels wird nun automatisch über das als Saugheber fungierende Überlaufrohr 33 das im Überlaufbereich 28 befindliche Kühlmittel abgesaugt, es strömt in den Verdampferbereich 26. Dieser Absaugvorgang läuft so lange ab, bis der Pegel wieder so weit gesunken ist, dass er in der Ebene der Ansaugöffnung 38 des Ansaugschenkels 34 liegt. Sodann endet der Absaugvorgang.

Das über das Überlaufrohr 33 abgesaugte Kühlmittel strömt wie beschrieben in den Verdampferbereich 26. Dort trifft es auf die Wärmequelle 37. Dies führt zur sofortigen Verdampfung des Kühlmittels 27, wie durch den vom Boden des Verdampferraums 26 nach oben geführten, nunmehr gestrichelten Pfeil gezeigt. Es kommt zur Erzeugung respektive zum Aufbau eines Überdrucks im gesamten Vorratsgefäß, nachdem der Verdampferraum 26 atmosphärisch mit dem Vorratsraum 25 verbunden ist. Dieser Überdruck lastet auf dem Pegel des Kühlmittels 27 im Vorratsbereich 25. Ist der Überdruck groß genug, so kommt es dazu, dass Kühlmittel 27 von unten in das Rohr 21 eingedrückt wird und über dieses in den Hohlraum 12 der Maschine 2 gefördert wird, wo es seine Kühlwirkung entfaltet und erneut verdampft. Das verdampfte Kühlmittel gelangt sodann über die Leitung 23, 24 zur Verflüssigungseinrichtung 15, wo es erneut verflüssigt wird und über die Leitung 19 wieder dem Vorratsgefäß 20 zugeführt wird. Der Pegel des Kühlmittels 27 im Vorratsbereich 25 ist infolge des Herauspressens des Kühlmittels 27 gesunken, das Absinken des Pegels hängt von der Höhe des erzeugten Überdrucks ab. Über den kontinuierlichen Zulauf von Kühlmittel steigt der Pegel im Vorratsbereich 25 kontinuierlich wieder an, bis er erneut so hoch ist, dass Kühlmittel 27 über die Überlaufwand 29 in den Überlaufbereich 28 strömt und sodann dort der Pegel erneut steigt, bis das Niveau des Querschenkels 35 erreicht ist und es zum nächsten automatischen Absaugvorgang, verbunden mit dem umgehenden Verdampfungsvorgang und der Erzeugung des Überdrucks und dem Herauspressen des Kühlmittels über die Steigleitung 21 in den Hohlraum 12 kommt. Es ist also ein kontinuierlicher, automatischer Zyklus realisiert, der ein intervallmäßiges, automatisches Pumpen des Kühlmittels allein durch Erzeugung des Überdrucks im Vorratsgefäß 20 ermöglicht.

Die Ausbildung des Überlaufbereichs 28 über die Überlaufwand 29 ist nicht zwingend erforderlich. Es ist auch denkbar, das Kühlmittel 27 direkt aus dem "einteiligen" Vorratsbereich 25 zu saugen. In diesem Fall würde der Absaugvorgang dann einsetzen, wenn der allgemeine Kühlmittelpegel im Vorratsbereich 25 das Niveau des Querschenkels 35 erreicht. Es wird maximal so viel Kühlmittel abgesaugt, bis der Pegel wieder auf die Ebene der Ansaugöffnung 38 gesunken ist. In diesem Fall wird ein größeres Flüssigkeitsvolumen automatisch abgesaugt, als bei der Ausgestaltung gemäß Fig. 2, wo das maximale absaugbare Flüssigkeitsvolumen letztlich durch die Größe des Überlaufbereichs in Verbindung mit dem Abstand h zwischen der Ebene der Ansaugöffnung 38 und der Ebene des Querschenkels 35 definiert ist. In der Regel reicht jedoch ein relativ geringes abgesaugtes Volumen aus, um einen hinreichenden Überdruck (in der Regel ist ein Überdruck ≥ 0,1 bar ausreichend) zu erzeugen.

Ein weiterer Vorteil der in Fig. 2 gezeigten Ausgestaltung mit dem Überlaufbereich 28 liegt darin, dass dieses System relativ unempfindlich gegen leichte Verkippungen des Vorratsgefäßes 20 ist, wie sie beispielsweise auftreten können, wenn die Maschine 2 auf Schiffen transportiert oder Off-Shore-Einrichtungen betrieben wird. In diesem Fall kann es aufgrund der Bewegung des Schiffs oder der Off-Shore-Einrichtung zu Schwankungen und Verlagerungen der Vorrichtung 1 kommen, der jeweilige Pegel des Kühlmittels 27 bleibt jedoch stets in der Horizontalen. Ist kein Überlaufbereich 28 vorgesehen, so kann eine solche Verkippung dazu führen, dass der Pegel im Bereich des Absaugschenkels 34 verkippungsbedingt beachtlich sinkt, mithin also ein Absaugvorgang, da das Niveau des Querschenkels 35 respektive des dann zu betrachtenden Scheitelpunkts nicht erreicht wird, für geraume Zeit nicht einsetzt, wenngleich von der Füllmenge bezogen auf die horizontale Ausgangslage hinreichend Kühlmittel 27 im Vorratsbereich 25 vorhanden wäre. Das heißt, dass sich eine solche Bewegung durchaus auf den automatischen Absaugvorgang und damit auf die Förderung des Kühlmittels 27 zum Hohlraum 12 auswirken kann, Lageänderungen haben also einen möglichen Einfluss.

Ist jedoch ein Überlaufbereich 28 vorgesehen, so ist dieser quasi als separates System zu sehen. Da er relativ klein ist, wirken sich solche Schwankungen nur marginal aus. Irgendeine Höhendifferenz, die auch nur näherungsweise ein relevantes Absinken des Pegels im Bereich der Ansaugöffnung hervorrufen würde, kann sich nicht einstellen, weshalb folglich etwaige Lageänderungen der Gesamtanordnung keine Auswirkung auf den automatischen Absaugvorgang über das als Saugheber fungierende Überlaufrohr 33 und damit auch den Verdampfungsvorgang und daraus resultierenden Kühlmittelfördervorgang. Das System ist folglich äußerst stabil, daraus resultierend aber auch der Betrieb der Maschine 2.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den durch die beigefügten Patentansprüche festgelegten Schutzumfang der Erfindung zu verlassen.

## Patentansprüche

1. Vorrichtung zur Kühlung einer supraleitenden Maschine, umfassend ein kondensiertes Kühlmittel aufnehmendes Vorratsgefäß, aus dem das Kühlmittel über ein Rohr der Maschine zuführbar ist, **dadurch gekennzeichnet, dass** das Vorratsgefäß (20) einen Vorratsbereich (25) und einen davon abgetrennten Verdampferbereich (26) mit einer kontinuierlich eine Temperatur oberhalb der Siedetemperatur des Kühlmittels (27) aufweisenden Wärmequelle (37) aufweist, der über ein gekrümmtes Überlaufrohr (33) mit dem Vorratsbereich (25) derart verbunden ist, dass mit Erreichen eines bestimmten Kühlmittelfüllstands im Vorratsbereich (25) Kühlmittel (27) über das Überlaufrohr (33) automatisch in den Verdampferbereich (26) strömt und dort verdampft.

2. Vorrichtung nach Anspruch 1, **dadurch gekennzeichnet, dass** das Überlaufrohr (33) U-förmig gekrümmt ist und einen im Vorratsbereich (25) angeordneten Ansaugschenkel (34) und einen im Verdampferbereich (26) angeordneten Ablaufschenkel (36) aufweist.

3. Vorrichtung nach Anspruch 1 oder 2, **dadurch gekennzeichnet, dass** der Scheitelpunkt des Überlaufrohrs (33) unterhalb der Oberkante (31) der den Vorratsbereich (25) vom Verdampferbereich (26) trennenden Trennwand (32) liegt.

4. Vorrichtung nach Anspruch 2 und 3, **dadurch gekennzeichnet, dass** der höhenmäßige Abstand (h) zwischen der Ansaugöffnung (38) des Ansaugschenkels (34) und dem Scheitelpunkt wenigstens einen, vorzugsweise mehrere Zentimeter beträgt.

5. Vorrichtung nach einem der vorangehenden Ansprüche, **dadurch gekennzeichnet, dass** im Vorratsbereich (25) mittels einer Überlaufwand (29) ein Überlaufbereich (28) abgetrennt ist, in den Kühlmittel (27) überläuft und aus dem mit Erreichen eines bestimmten Füllstands Kühlmittel (27) über das Überlaufrohr (33) in den Verdampferbereich (26) läuft.

6. Vorrichtung nach einem der vorangehenden Ansprüche, **dadurch gekennzeichnet, dass** die Wärmequelle (37) eine Heizung, insbesondere eine Widerstandsheizung ist.

7. Vorrichtung nach einem der Ansprüche 1 bis 5, **dadurch gekennzeichnet, dass** die Wärmequelle (37) eine Wandfläche, insbesondere die Bodenfläche des Verdampferbereichs (26) ist, welche Wandfläche in der Montagestellung mit einem eine oberhalb der Siedetemperatur des Kühlmittels liegende Temperatur aufweisenden Drittgegen-stand in thermischem Kontakt steht.

8. Vorrichtung nach einem der vorangehenden Ansprüche, **dadurch gekennzeichnet, dass** mehrere Vorratsgefäße (20) vorgesehen sind, deren als Steigleitungen (21) ausgeführte Rohre separat zur Maschine (2) geführt sind, oder deren Steigleitungen (21) in eine gemeinsame zur Maschine (2) laufende Zuleitung münden.

9. Vorrichtung nach Anspruch 8, **dadurch gekennzeichnet, dass** jedem Vorratsgefäß (20) eine eigene Verflüssigungseinrichtung (15) zum Kondensieren des von der Maschine (2) kommenden gasförmigen Kühlmittels (27) zugeordnet ist, oder dass den Vorratsgefäßen (20) eine gemeinsame Verflüssigungseinrichtung (15) zugeordnet ist.

10. Vorrichtung nach einem der vorangehenden Ansprüche, **dadurch gekennzeichnet, dass** das Kühlmittel im Rohr entgegen der Schwerkraft gefördert wird.

## Claims

1. Device for cooling a superconducting machine, comprising a storage vessel accommodating a condensed coolant, from which the coolant is able to be supplied via a pipe to the machine, **characterised in that** the storage vessel (20) has a storage region (25) and an evaporator region (26) separated therefrom with a heat source (37) having a temperature continuously above the boiling temperature of the coolant (27), which is connected via a curved overflow pipe (33) to the storage region (25) such that, when a specific coolant fill level in the storage region (25) is reached, coolant (27) flows automatically via the overflow pipe (33) into the evaporator region (26) and evaporates there.

2. Device according to claim 1, **characterised in that** the overflow pipe (33) is curved in a U shape and has a suction arm (34) disposed in the storage region (25) and an outlet arm (36) disposed in the evaporator region (26).

3. Device according to claim 1 or 2, **characterised in that** the apex of the overflow pipe (33) lies below the upper edge (31) of the partition wall (32) separating the storage region (25) from the evaporator region (26).

4. Device according to claim 2 and 3, characterised that the distance in height terms (h) between the suction opening (38) of the suction arm (34) and the apex amounts to at least one, preferably several centimetres.

5. Device according to one of the preceding claims, **characterised in that**, in the storage region (25), an overflow region (28) is separated off by means of an overflow wall (29), into which coolant (27) overflows and from which, when a specific fill level is reached, coolant (27) runs via the overflow pipe (33) into the evaporator region (26).

6. Device according to one of the preceding claims, **characterised in that** the heat source (37) is a heater, especially a resistive heater.

7. Device according to one of claims 1 to 5, **characterised in that** the heat source (37) is a wall surface, especially the floor surface of the evaporator area (26), which wall surface, in the installation position, is in thermal contact with a third object having a temperature lying above the boiling temperature of the coolant.

8. Device according to one of the preceding claims **characterised in that** a number of storage vessels (20) are provided, of which the pipes designed as riser lines (21) are routed separately to the machine (2), or the riser lines (21) of which open out into a common supply line running to the machine (2).

9. Device according to claim 8, **characterised in that** each storage vessel (20) is assigned a separate condenser device (15) for condensing the gaseous coolant (27) coming from the machine (2), or that the storage vessels (20) are assigned a common condenser device (15).

10. Device according to one of the preceding claims, **characterised in that** the coolant is conveyed in the pipe against the force of gravity.

## Revendications

1. Procédé de refroidissement d'une machine supraconductrice comprenant un réservoir, qui reçoit un agent réfrigérant condensé et duquel l'agent réfrigérant peut être envoyé à la machine par un tuyau, **caractérisé en ce que** le réservoir (20) a une partie (25) formant réservoir et une partie (26) formant évaporateur, qui en est séparée et qui a une source (37) de chaleur ayant continuellement une température supérieure au point d'ébullition de l'agent (27) réfrigérant, la partie (26) formant évaporateur communiquant par un tuyau (33) courbé de trop plein avec la partie (25) formant réservoir de manière à ce que, lorsqu'un niveau déterminé de l'agent de refroidissement est atteint dans la partie (25) formant réservoir, l'agent (27) réfrigérant passe par le tuyau (33) de trop plein automatiquement dans la partie (26) formant évaporateur et s'y évapore.

2. Dispositif suivant la revendication 1, **caractérisé en ce que** le tuyau (33) de trop plein est courbé en forme de U et a une branche (34) d'aspiration disposée dans la partie (25) formant réservoir et une branche (36) d'évacuation disposée dans la partie (26) formant évaporateur.

3. Dispositif suivant la revendication 1 ou 2, **caractérisé en ce que** le point culminant du tuyau (33) de trop plein est en dessous du bord (31) supérieur de la cloison (32) séparant la partie (25) formant réservoir de la partie (26) formant évaporateur.

4. Dispositif suivant les revendications 2 et 3, **caractérisé en ce que** la distance (h) en hauteur entre l'ouverture (38) d'aspiration de la branche (34) d'aspiration et le point culminant est d'au moins un, de préférence de plusieurs centimètres.

5. Dispositif suivant l'une des revendications précédentes, **caractérisé en ce que**, dans la partie (25) formant réservoir, il est séparé au moyen d'une paroi (29) de trop plein une partie (28) de trop plein, dans laquelle de l'agent (27) réfrigérant déborde et de laquelle, lorsqu'est atteint un niveau déterminé, de l'agent (27) réfrigérant va dans la partie (26) formant évaporateur en passant par le tuyau (33) de trop plein.

6. Dispositif suivant l'une des revendications précédentes, **caractérisé en ce que** la source (37) de chaleur est un chauffage, notamment un chauffage par résistance.

7. Dispositif suivant l'une des revendications 1 à 5, **caractérisé en ce que** la source (37) de chaleur est une surface de paroi, notamment la surface de fond de la partie (26) formant évaporateur, laquelle surface de paroi est, dans la position de montage, en contact thermique avec un objet tiers ayant une température supérieure au point d'ébullition de l'agent réfrigérant.

8. Dispositif suivant l'une des revendications précédentes, **caractérisé en ce qu'**il est prévu plusieurs réservoirs (20) dont les tuyaux réalisés sous la forme de conduits (21) montants vont séparément à la machine (2) ou dont les conduits (21) montants débouchent dans une conduite d'entrée commune allant à la machine (2).

9. Dispositif suivant la revendication 8, **caractérisé en ce qu'**à chaque réservoir (20) est associé son propre dispositif (15) de liquéfaction pour condenser l'agent (27) réfrigérant gazeux venant de la machine (2) ou **en ce qu'**au réservoir (20) est associé un dispositif (15) commun de liquéfaction.

10. Dispositif suivant l'une des revendications précédentes, **caractérisé en ce que** l'agent réfrigérant est véhiculé dans le tuyau à l'encontre de la force de gravité.
